# EUROPEAN PATENT APPLICATION

(11) **EP 3 879 224 A1**
(43) Date of publication of application: **15.09.2021**
(21) Application number: 19881251.3
(22) Date of filing: 21.10.2019
(51) Int. Cl.: G01C 3/06, G01B 11/00

(54) **OPTICAL MEASUREMENT DEVICE AND OPTICAL MEASUREMENT METHOD**

(30) Priority: 08.11.2018 JP 2018210436
(71) Applicant: OMRON Corporation, Shiokoji-dori, Shimogyo-ku, Kyoto-shi Kyoto 600-8530 (JP)
(72) Inventor: TAKASHIMA, Jun, Kyoto-shi, Kyoto 600-8530 (JP); KANETANI, Yoshihiro, Kyoto-shi, Kyoto 600-8530 (JP)
(74) Representative: Emde, Eric
(86) International application number: PCT/JP2019/041343
(87) International publication number: WO 2020/095667

(57) **Abstract**

In the present invention, a measured waveform signal is obtained from a received light amount distribution signal. An optical measurement device 100 is provided with: a light source 10 for emitting light towards a target TA; a light-receiving unit 40 that is configured so that each of a plurality of pixels is able to detect a received light amount, and that obtains a received light amount distribution signal of each of the pixels; an acquisition unit 51 for acquiring a measured waveform signal MS from received light amount distribution signals for reflected light that is reflected by the target TA on the basis of received light amount distribution signals for when no target TA is present; and an adjustment unit 53 for adjusting a sensitivity parameter with respect to the received light amount distribution signals of the reflected light so that the measured waveform signal MS is acquired when some of the received light amounts of the received light amount distribution signals of the reflected light are a predetermined value or higher.

## Description

### [Technical Field]

The present invention relates to an optical measurement device and an optical measurement method.

### [Background Art]

Since the past, it has been known that, in a reflection-type optical sensor 1 including a light projection unit 101 and a light-receiving unit 102 having a configuration in which electric charge associated with light reception is accumulated for a predetermined time by an array of a plurality of photoelectric conversion elements and then is output, the maximum number of times of sensitivity adjustment that can be realized within a response time is obtained on the basis of the length of time allowed as a response time after projection of light onto a detection target is started and before a determination output is performed and the length of period of a measurement process including light projection, light reception, and a sensitivity adjustment process, and a combination of adjustment ranges of sensitivity parameters of an exposure time, the intensity of light projection, and an amplification factor of the amount of light received is set on the condition that a dynamic range based on sensitivity adjustment for the maximum number of times does not exceed a maximum dynamic range determined by the maximum number of times and a maximum magnification which is adjusted through one sensitivity adjustment process (see Patent Literature 1). This optical sensor can make the dynamic range as wide as possible while maintaining a required response time.

### [Citation List]

### [Patent Literature]

[Patent Literature 1] Japanese Patent Laid-Open No. 2013-190378

### [Summary of Invention]

### [Technical Problem]

On the other hand, it is known that, in a case where a received light amount distribution signal for each pixel is obtained using a plurality of pixels constituting a light-receiving unit, the received light amount distribution signal includes a return light component reflected on the connecting portion of a fiber cable or the like in addition to a signal light component reflected by a target.

In order to remove this return light component, in an optical measurement device of the related art, a measured waveform signal which is a signal light component reflected by a target has been obtained by subtracting a received light amount distribution signal obtained in a state in which the target is not present from a received light amount distribution signal obtained in a state in which the target is present, and a distance to the target has been measured on the basis of this measured waveform signal.

However, in a case where the received light amount distribution signal is obtained in a state in which the target is present using the sensitivity parameter of the received light amount distribution signal obtained in a state in which the target is not present, a portion of the received light amount thereof may be saturated, and the measured waveform signal may not be obtained.

Consequently, an objective of the present invention is to provide an optical measurement device and an optical measurement method that make it possible to obtain a measured waveform signal from a received light amount distribution signal.

### [Solution to Problem]

According to an aspect of the present invention, there is provided an optical measurement device including: a light projection unit that emits light toward a target; a light-receiving unit configured so that each of a plurality of pixels is able to detect an amount of light received, the light-receiving unit obtaining a received light amount distribution signal for each of the pixels; an acquisition unit that acquires a measured waveform signal from the received light amount distribution signal of reflected light which is reflected by the target on the basis of the received light amount distribution signal when the target is not present; and an adjustment unit that adjusts a sensitivity parameter with respect to the received light amount distribution signal of the reflected light so that the measured waveform signal is acquired when a portion of the received light amount of the received light amount distribution signal of the reflected light is a predetermined value or higher.

According to this aspect, the sensitivity parameter with respect to the received light amount distribution signal of the reflected light of the target is adjusted so that the measured waveform signal is acquired when a portion of the received light amount of the received light amount distribution signal of the reflected light which is reflected by the target is a predetermined value or higher. Thereby, in the received light amount distribution signal of the reflected light of the target obtained after the sensitivity parameter is adjusted, it is possible to set the amount of light received to be less than a predetermined value, for example, to prevent the amount of light received from being saturated, and the received light amount distribution signal of the reflected light of the target after the sensitivity parameter is adjusted includes a signal light component. Therefore, by adjusting the sensitivity parameter of the received light amount distribution signal of the reflected light which is reflected by the target, it is possible to acquire a measured waveform signal from the received light amount distribution signal of the reflected light of the target.

In the above aspect, the adjustment unit may adjust the sensitivity parameter with respect to the received light amount distribution signal of the reflected light so that a peak received light amount of the acquired measured waveform signal is set to a predetermined value or higher.

According to this aspect, the sensitivity parameter with respect to the received light amount distribution signal of the reflected light of the target is adjusted so that the peak received light amount of the acquired measured waveform signal is set to a predetermined value or higher. Thereby, for example, by setting a threshold less than a predetermined value with respect to the measured waveform signal, it is possible to exclude a signal caused by noise or the like that can be confused with the measured waveform signal.

In the above aspect, the adjustment unit may set a range for adjusting the sensitivity parameter on the basis of a reflectance of the target.

According to this aspect, a range for adjusting the sensitivity parameter is set on the basis of the reflectance of the target. Thereby, it is possible to narrow (limit) the adjustment range of the sensitivity parameter, and to shorten a time taken to adjust the sensitivity parameter.

In the above aspect, the adjustment unit may set a range for adjusting the sensitivity parameter on the basis of the sensitivity parameter when the previous measured waveform signal is acquired.

According to this aspect, a range for adjusting the sensitivity parameter is set on the basis of the sensitivity parameter when the previous measured waveform signal is acquired. Thereby, it is possible to narrow (limit) the adjustment range of the sensitivity parameter, and to shorten a time taken to adjust the sensitivity parameter.

In the above aspect, the sensitivity parameter may include at least one of an amount of the light projected, power of the light projected, an exposure time of the light-receiving unit, and a gain of the light-receiving unit.

According to this aspect, the sensitivity parameter includes at least one of the amount of the light projected, the power of the light projected, the exposure time of the light-receiving unit, and the gain of light-receiving unit. Thereby, it is possible to easily change the amount of light received in the received light amount distribution signal of the reflected light which is reflected by the target.

In the above aspect, the predetermined value of the amount of light received may be a value at which the amount of light received is saturated.

According to this aspect, the predetermined value of the amount of light received in the received light amount distribution signal of the reflected light of the target is a value at which the amount of light received is saturated. Thereby, it is possible to prevent the amount of light received from being saturated in the received light amount distribution signal of the reflected light of the target obtained after the sensitivity parameter is adjusted.

In the above aspect, the optical measurement device may further include a measurement unit that measures a distance from the optical measurement device to the target on the basis of the measured waveform signal.

According to this aspect, a distance from the optical measurement device to the target is measured on the basis of the measured waveform signal. Thereby, a return light component included in the received light amount distribution signal which is a noise component for the measured waveform signal is removed. Therefore, it is possible to measure a distance by suppressing the influence of noise compared with a case where the distance from the optical measurement device to the target is measured on the basis of the received light amount distribution signal of the reflected light which is reflected by the target.

In the above aspect, the optical measurement device may further include an optical system that causes chromatic aberration in an optical axis direction with respect to the light and irradiates the target with the light that causes chromatic aberration. The light may include a plurality of wavelength components, the optical system may condense the reflected light, and the light-receiving unit may be configured to be able to detect an amount of light received for each of the wavelength components.

According to this aspect, chromatic aberration in an optical axis direction is caused with respect to the light, the target is irradiated with the light that causes chromatic aberration, the light includes a plurality of wavelength components, and the reflected light is condensed, so that it is possible to detect the amount of light received for each wavelength component. It is possible to easily realize an optical measurement device of a white light confocal system that obtains a measured waveform signal from the received light amount distribution signal of the reflected light of the target.

In addition, according to another aspect of the present invention, there is provided an optical measurement method including: a light projection step of emitting light toward a target; a light-receiving step of obtaining a received light amount distribution signal for each pixel; an acquisition step of acquiring a measured waveform signal from the received light amount distribution signal of reflected light which is reflected by the target on the basis of the received light amount distribution signal when the target is not present; and an adjustment step of adjusting a sensitivity parameter with respect to the received light amount distribution signal of the reflected light so that the measured waveform signal is acquired when a portion of the received light amount of the received light amount distribution signal of the reflected light is a predetermined value or higher.

According to this aspect, the sensitivity parameter with respect to the received light amount distribution signal of the reflected light of the target is adjusted so that the measured waveform signal is acquired when a portion of the received light amount of the received light amount distribution signal of the reflected light which is reflected by the target is a predetermined value or higher. Thereby, in the received light amount distribution signal of the reflected light of the target obtained after the sensitivity parameter is adjusted, it is possible to set the amount of light received to be less than a predetermined value, for example, to prevent the amount of light received from being saturated, and the received light amount distribution signal of the reflected light of the target after the sensitivity parameter is adjusted includes a signal light component. Therefore, by adjusting the sensitivity parameter of the received light amount distribution signal of the reflected light which is reflected by the target, it is possible to acquire a measured waveform signal from the received light amount distribution signal of the reflected light of the target.

In the above aspect, the adjustment step may include adjusting the sensitivity parameter with respect to the received light amount distribution signal of the reflected light so that a peak received light amount of the acquired measured waveform signal is set to a predetermined value or higher.

According to this aspect, the sensitivity parameter with respect to the received light amount distribution signal of the reflected light of the target is adjusted so that the peak received light amount of the acquired measured waveform signal is set to a predetermined value or higher. Thereby, for example, by setting a threshold less than a predetermined value with respect to the measured waveform signal, it is possible to exclude a signal caused by noise or the like that can be confused with the measured waveform signal.

In the above aspect, the adjustment step may include setting a range for adjusting the sensitivity parameter on the basis of a reflectance of the target.

According to this aspect, a range for adjusting the sensitivity parameter is set on the basis of the reflectance of the target. Thereby, it is possible to narrow (limit) the adjustment range of the sensitivity parameter, and to shorten a time taken to adjust the sensitivity parameter.

In the above aspect, the adjustment step may include setting a range for adjusting the sensitivity parameter on the basis of the sensitivity parameter when the previous measured waveform signal is acquired.

According to this aspect, a range for adjusting the sensitivity parameter is set on the basis of the sensitivity parameter when the previous measured waveform signal is acquired. Thereby, it is possible to narrow (limit) the adjustment range of the sensitivity parameter, and to shorten a time taken to adjust the sensitivity parameter.

In the above aspect, the sensitivity parameter may include at least one of an amount of the light projected, power of the light projected, an exposure time of a light-receiving unit, and a gain of the light-receiving unit.

According to this aspect, the sensitivity parameter includes at least one of the amount of the light projected, the power of the light projected, the exposure time of the light-receiving unit, and the gain of light-receiving unit. Thereby, it is possible to easily change the amount of light received in the received light amount distribution signal of the reflected light which is reflected by the target.

In the above aspect, the predetermined value of the amount of light received may be a value at which the amount of light received is saturated.

According to this aspect, the predetermined value of the amount of light received in the received light amount distribution signal of the reflected light of the target is a value at which the amount of light received is saturated. Thereby, it is possible to prevent the amount of light received from being saturated in the received light amount distribution signal of the reflected light of the target obtained after the sensitivity parameter is adjusted.

In the above aspect, the optical measurement method may further include a measurement step of measuring a distance from an optical measurement device to the target on the basis of the measured waveform signal.

According to this aspect, a distance from the optical measurement device to the target TA is measured on the basis of the measured waveform signal. Thereby, a return light component included in the received light amount distribution signal which is a noise component for the measured waveform signal is removed. Therefore, it is possible to measure a distance by suppressing the influence of noise compared with a case where the distance from the optical measurement device to the target is measured on the basis of the received light amount distribution signal of the reflected light which is reflected by the target.

### [Advantageous Effects of Invention]

According to the present invention, it is possible to obtain the measured waveform signal from the received light amount distribution signal.

### [Brief Description of Drawings]

Fig. 1 is a configuration diagram illustrating a schematic configuration of an optical measurement device according to the present embodiment.
Fig. 2 is a waveform diagram illustrating an example of a received light amount distribution signal of reflected light which is reflected by a target.
Fig. 3 is a waveform diagram illustrating an example of the received light amount distribution signal when the target is not present.
Fig. 4 is a waveform diagram illustrating an example of a measured waveform signal.
Fig. 5 is a waveform diagram illustrating another example of the received light amount distribution signal of the reflected light which is reflected by the target.
Fig. 6 is a signal diagram illustrating a first example in which an adjustment unit shown in Fig. 1 adjusts the amount of light projected.
Fig. 7 is a signal diagram illustrating a second example in which the adjustment unit shown in Fig. 1 adjusts the amount of light projected.
Fig. 8 is a signal diagram illustrating a third example in which the adjustment unit shown in Fig. 1 adjusts the amount of light projected.
Fig. 9 is a signal diagram illustrating a fourth example in which the adjustment unit shown in Fig. 1 adjusts the amount of light projected.

### [Description of Embodiments]

A preferred embodiment of the present invention will be described with reference to the accompanying drawings. Meanwhile, in each drawing, objects denoted by the same reference numerals and signs have the same or similar configurations.

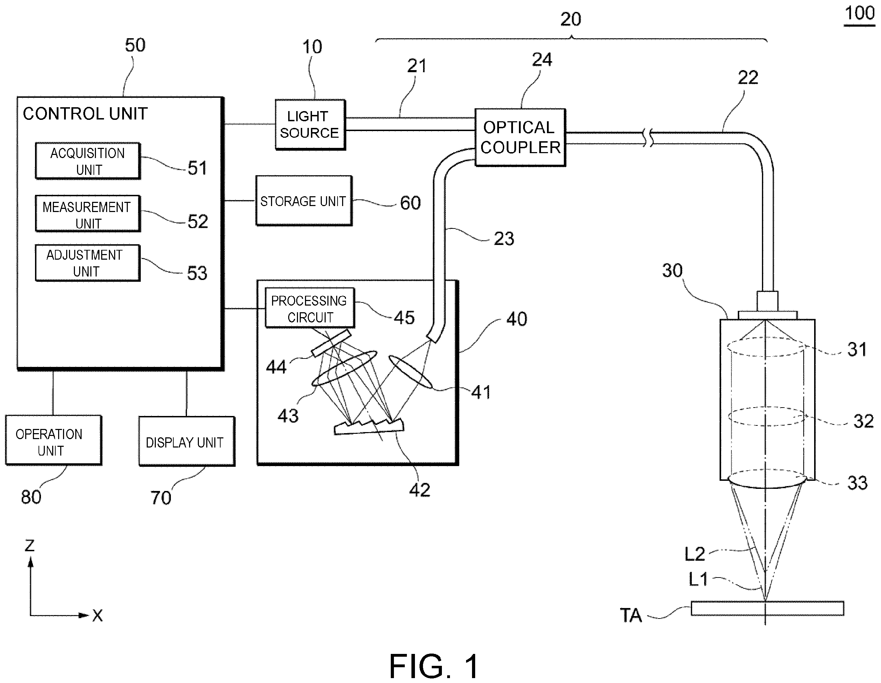

First, the configuration of an optical measurement device according to the present embodiment will be described with reference to Fig. 1. The drawing is a configuration diagram illustrating a schematic configuration of an optical measurement device 100 according to the present embodiment.

As shown in Fig. 1, the optical measurement device 100 includes a light source 10, a light guide unit 20, a sensor head 30, a light-receiving unit 40, a control unit 50, a storage unit 60, a display unit 70, and an operation unit 80. The optical measurement device 100 measures a distance from the device, specifically, the sensor head 30, to a target TA in a predetermined measurement period. In addition, the optical measurement device 100 may measure a change in distance based on a certain position, that is, a displacement in a predetermined measurement period.

The light source 10 is configured to emit light including a plurality of wavelength components. The light emitted from the light source 10 is directed to the target TA. Meanwhile, the light source according to the present embodiment is equivalent to an example of a "light projection unit" of the present invention.

The light source 10 is supplied with a predetermined current value to emit light of predetermined power (hereinafter referred to as "power of light projected") at a predetermined ratio of a light projection time to a measurement period (hereinafter, the ratio of a light projection time to a measurement period is referred to as "the amount of light projected" (its unit is %)), for example, on the basis of a control signal which is input from the control unit 50. The amount of light projected, the power of light projected, or the like can be changed on the basis of the control signal.

It is preferable that the light source 10 emit light including a plurality of wavelength components. In this case, the light source 10 is configured to include, for example, a white light emitting diode (LED), and generates white light. However, the light emitted by the light source 10 may be any light insofar as it includes a wavelength range that covers a distance range required for the optical measurement device 100, and is not limited to white light.

The light guide unit 20 is intended to propagate light. The light guide unit 20 includes, for example, a first cable 21, a second cable 22, a third cable 23, and an optical coupler 24.

One end (the left end in Fig. 1) of the first cable 21 is optically connected to the light source 10. One end (the right end in Fig. 1) of the second cable 22 is optically connected to the sensor head 30. One end (the left end in Fig. 1) of the third cable 23 is optically connected to the light-receiving unit 40. The other end (the right end in Fig. 1) of the first cable 21 and the other end (the right end in Fig. 1) of the third cable 23 are optically connected to the other end (the left end in Fig. 1) of the second cable 22 with the optical coupler 24 interposed therebetween.

The optical coupler 24 transmits light incident from the first cable 21 to the second cable 22, and divides light incident from the second cable 22 to transmit the divided light to the first cable 21 and the third cable 23. Meanwhile, the light transmitted from the second cable 22 to the first cable 21 by the optical coupler 24 is terminated at the light source 10.

The optical coupler 24 is configured to include, for example, a fused-drawn type (melt-drawn type) optical coupler. On the other hand, the first cable 21, the second cable 22, and the third cable 23 are each composed of, for example, an optical fiber. Each optical fiber may be a single core having one core, or may be a multicore having a plurality of cores.

The sensor head 30 is intended to irradiate the target TA with light. In addition, the sensor head 30 is intended to condense reflected light from the target TA. Meanwhile, the sensor head 30 according to the present embodiment is equivalent to an example of an "optical system" of the present invention.

The sensor head 30 includes, for example, a collimator lens 31, a diffraction lens 32, and an objective lens 33.

The collimator lens 31 is configured to convert the light incident from the second cable into parallel light. The collimator lens 31 is configured to include one or a plurality of lenses. In addition, the collimator lens 31 is intended to condense light incident on the sensor head 30.

The diffraction lens 32 is configured to cause chromatic aberration in an optical axis direction in the parallel light. The objective lens 33 is configured to collectively irradiate the target TA with the light that causes chromatic aberration. Since axial chromatic aberration is generated by the diffraction lens 32, light radiated from the objective lens 33 has a focus at a different distance (position) for each wavelength.

The example shown in Fig. 1 shows light L1 having a first wavelength of which the focal length is relatively long and light L2 having a second wavelength of which the focal length is relatively short. The light L1 having a first wavelength is in focus (is focused) on the surface of the target TA, while the light L2 having a second wavelength is in focus (is focused) in front of the target TA.

Light reflected from the surface of the target TA is condensed by the collimator lens 31 through the objective lens 33 and the diffraction lens 32, and is incident on the second cable 22. The light L1 having a first wavelength in the reflected light is in focus on the end surface of the second cable 22 which is confocal, and most of it is incident on the second cable 22. On the other hand, other wavelengths are out of focus on the end surface of the second cable 22, and are not incident on the second cable 22. A portion of reflected light incident on the second cable 22 is transmitted to the third cable 23 by the optical coupler 24, and is emitted to the light-receiving unit 40.

In a case where the second cable 22 is an optical fiber, and its core is equivalent to a pinhole. Thus, the pinhole for condensing reflected light becomes small by reducing the core diameter of the optical fiber, and light having a wavelength focused on the surface of the target TA can be stably detected.

The light-receiving unit 40 is intended to obtain a received light amount distribution signal to be described later with respect to light condensed by the sensor head 30. The light condensed by the sensor head 30 is, for example, reflected light which is reflected by the target TA. The light-receiving unit 40 includes, for example, a collimator lens 41, a diffraction grating 42, an adjustment lens 43, a light receiving sensor 44, and a processing circuit 45.

The collimator lens 41 is configured to convert the light incident from the third cable into parallel light. The diffraction grating 42 is configured to spectrally disperse (separate) this parallel light for each wavelength component. The adjustment lens 43 is configured to adjust the spot diameter of spectrally dispersed light by wavelength.

The light receiving sensor 44 is configured to be able to detect the amount of light received for each wavelength component with respect to the spectrally dispersed light. The light receiving sensor 44 is configured to include a plurality of light receiving elements. The light receiving elements are arrayed one-dimensionally corresponding to the spectral direction of the diffraction grating 42. Thereby, each of the light receiving elements is disposed corresponding to light of each wavelength component which is spectrally dispersed, and the light receiving sensor 44 can detect the amount of light received for each wavelength component.

One light receiving element of the light receiving sensor 44 corresponds to one pixel. Thus, it can be said that the light receiving sensor 44 is configured such that each of a plurality of pixels can detect the amount of light received. Meanwhile, the light receiving elements may be arrayed two-dimensionally without being limited to a case where they are arrayed one-dimensionally. It is preferable that the light receiving elements be arrayed two-dimensionally, for example, on the detection surface of the diffraction grating 42 in its spectral direction.

Each of the light receiving elements accumulates electric charge in accordance with the amount of light received during a predetermined exposure time on the basis of a control signal which is input from the processing circuit 45. Each of the light receiving elements outputs an electrical signal according to the accumulated electric charge during a time other than the exposure time, that is, a non-exposure time, on the basis of the control signal which is input from the processing circuit 45. Thereby, the amount of light received in the exposure time is converted into an electrical signal.

The processing circuit 45 is configured to control light reception performed by the light receiving sensor 44. In addition, the processing circuit 45 is configured to perform signal processing for outputting an electrical signal which is input from each of the light receiving elements of the light receiving sensor 44 to the control unit 50. The processing circuit 45 is configured to include, for example, an amplifier circuit and an analog-to-digital (A/D) conversion circuit. The amplifier circuit amplifies the electrical signal which is input from each of the light receiving elements with a predetermined gain. The A/D conversion circuit samples, quantizes, and encodes the amplified electrical signal of each of the light receiving elements, and converts it into a digital signal. In this manner, the amount of light received which is detected by each of the light receiving elements is converted into a digital value to obtain a distribution signal of a received light amount (hereinafter simply referred to as a "received light amount distribution signal") for each light receiving element, that is, for each pixel. The processing circuit 45 outputs this received light amount distribution signal to the control unit 50. A predetermined exposure time of each of the light receiving elements, a predetermined gain of the amplifier circuit, and the like can be changed on the basis of the control signal.

The control unit 50 is configured to control an operation of each unit of the optical measurement device 100. In addition, the control unit 50 is configured to realize each function to be described later by executing a program stored in the storage unit 60, or the like. It is configured to realize each function to be described later by executing a program, or the like. The control unit 50 is configured to include, for example, a microprocessor such as a central processing unit (CPU), and a memory such as a read only memory (ROM), a random access memory (RAM), or a buffer memory.

The storage unit 60 is configured to store a program, data, or the like. The storage unit 60 is configured to include, for example, a hard disk drive, a solid-state drive, or the like. The storage unit 60 stores various programs executed by the control unit 50, data required for the execution of the programs, or the like in advance. In addition, the storage unit 60 is configured to store a received light amount distribution signal based on return light.

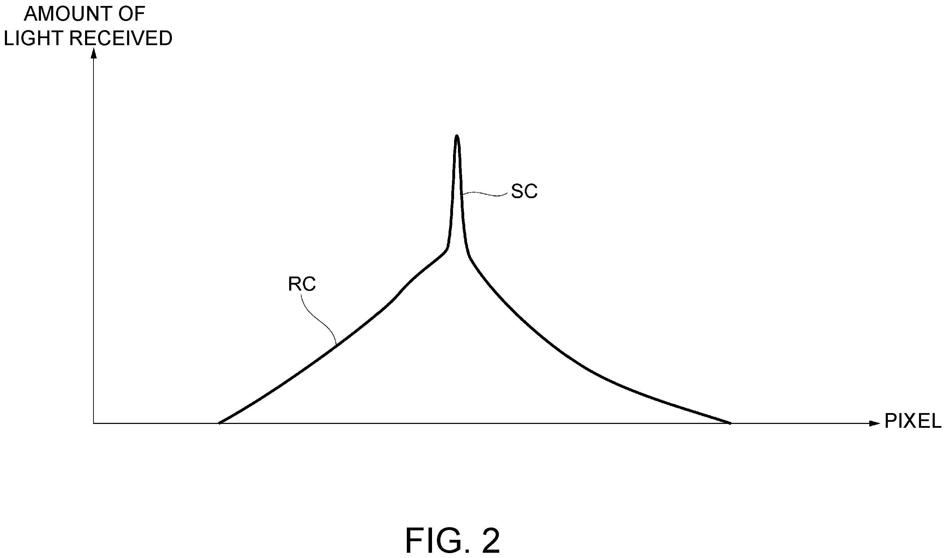

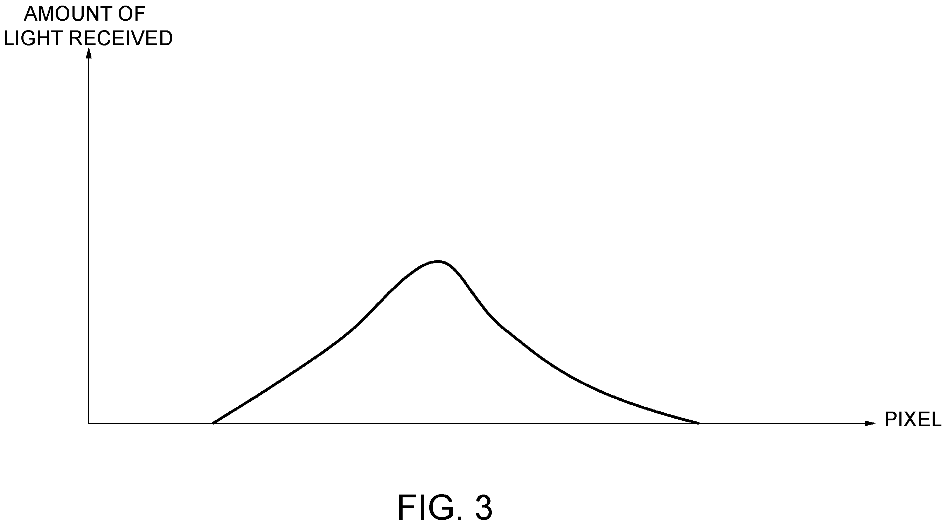

Here, an example of a received light amount distribution signal obtained by the light-receiving unit 40 will be described with reference to Figs. 2 and 3. Fig. 2 is a waveform diagram illustrating an example of a received light amount distribution signal of reflected light which is reflected by the target TA. Fig. 3 is a waveform diagram illustrating an example of the received light amount distribution signal when the target TA is not present. In Figs. 2 and 3, the horizontal axis is a pixel (each light receiving element of the light receiving sensor 44), and the vertical axis is the amount of light received.

As shown in Fig. 2, the received light amount distribution signal of reflected light which is reflected by the target TA includes a signal light component SC which is reflected light from the target TA and a return light component RC which is reflected light inside the optical measurement device 100. That is, a portion of the light emitted from the light source 10 is not emitted from the sensor head 30, and is reflected and returned inside the optical measurement device 100. This light is referred to as return light, and the return light is generated, for example, at a connecting portion between the second cable 22 and the sensor head 30, a connecting portion between the second cable 22 and the optical coupler 24, a connecting portion between the first cable 21 and the optical coupler 24, or the like. The return light appears as the return light component RC in the received light amount distribution signal.

On the other hand, since the return light is reflected light inside the optical measurement device 100, it appears in the received light amount distribution signal even in a state in which the target TA is not present and there is no reflected light from the target TA. For this reason, as shown in Fig. 3, the received light amount distribution signal when the target TA is not present is considered to be the same or substantially the same as the return light component RC shown in Fig. 2.

Thus, a received light amount distribution signal shown in Fig. 3 is obtained in a state in which the target TA is not present, and is stored in advance in the storage unit 60 as the received light amount distribution signal based on the return light. The received light amount distribution signal shown in Fig. 2 is obtained in a state in which the target TA is present, and the received light amount distribution signal shown in Fig. 3 is subtracted from, for example, the received light amount distribution signal shown in Fig. 2, so that the return light component RC is removed, and it is possible to acquire a measured waveform signal containing the signal light component SC as a main component.

Returning to the description of Fig. 1, the control unit 50 includes, for example, an acquisition unit 51, a measurement unit 52, and an adjustment unit 53 as its functional configuration.

The acquisition unit 51 is configured to acquire a measured waveform signal from the received light amount distribution signal shown in Fig. 2 on the basis of the received light amount distribution signal shown in Fig. 3.

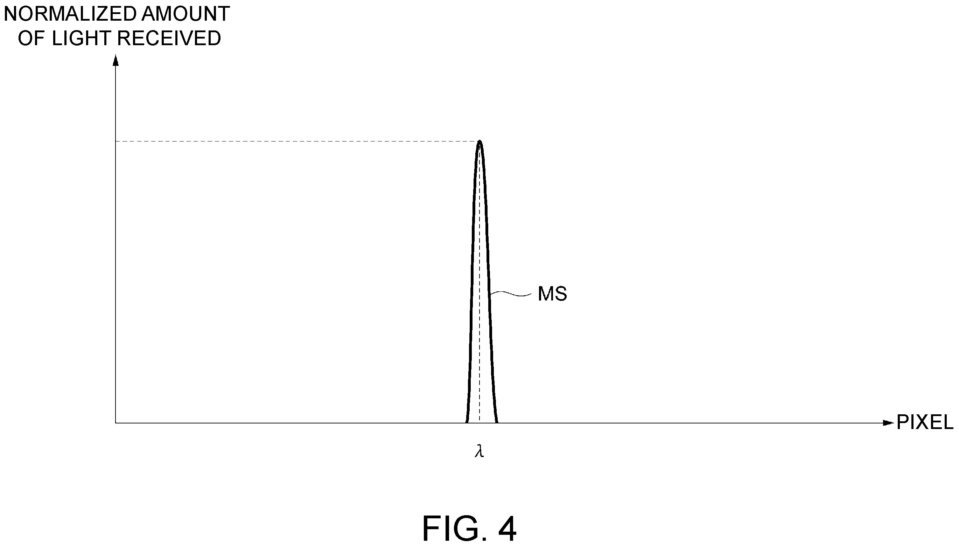

Here, a measured waveform signal which is acquired by the acquisition unit 51 will be described with reference to Fig. 4. The drawing is a waveform diagram illustrating an example of a measured waveform signal. In Fig. 4, the horizontal axis is a pixel (each light receiving element of the light receiving sensor 44), and the vertical axis is the normalized amount of light received.

Specifically, the acquisition unit 51 first deducts (subtracts) the received light amount distribution signal of the reflected light which is reflected by the target TA shown in Fig. 2, for each pixel, from the received light amount distribution signal when the target TA is not present shown in Fig. 3. Next, the acquisition unit 51 multiplies this subtraction result by an exposure time when the received light amount distribution signal of Fig. 2 is obtained with respect to an exposure time when the received light amount distribution signal of Fig. 3 is obtained, that is, (an exposure time in the received light amount distribution signal of Fig. 2) / (an exposure time in the received light amount distribution signal of Fig. 3). Thereby, a difference in the amount of light received caused by the exposure time is normalized. Meanwhile, the storage unit 60 stores the received light amount distribution signal of Fig. 3 as well as its exposure time in advance. The acquisition unit 51 divides this multiplication result by the received light amount distribution signal of Fig. 3 for each pixel. Thereby, dullness (blunting) caused by the return light component RC shown in Fig. 2 is corrected. In this manner, the acquisition unit 51 acquires a measured waveform signal MS shown in Fig. 4.

Returning to the description of Fig. 1, the measurement unit 52 is configured to measure a distance from the optical measurement device 100 to the target TA, accurately a distance from the sensor head 30 to the target TA on the basis of the measured waveform signal MS acquired by the acquisition unit 51. In the example shown in Fig. 1, the distance is a distance in a Z-axis direction.

As shown in Fig. 4, usually, the measured waveform signal MS has a waveform in which the amount of light received by a certain pixel becomes a peak. As described above, since a distance from the sensor head 30 to a point which is in focus differs depending on the wavelength, the pixel of the peak received light amount in the measured waveform signal MS is a pixel corresponding to the wavelength of light which is radiated from the sensor head 30 and is in focus on the target TA. The wavelength corresponds to a distance from the sensor head 30 to the target TA. In the example shown in Fig. 1, the light L1 having a first wavelength which is in focus on the surface of the target TA appears as the wavelength of the peak received light amount of the received light amount distribution signal.

Specifically, when the peak received light amount of the measured waveform signal MS is set to 100%, an intermediate point at two intersection points of a line of 50% received light amount and the measured waveform signal MS is obtained, and a wavelength λ corresponding to a pixel at the intermediate point is obtained.

A relationship (correspondence) between the wavelength λ and the distance is stored in advance in the memory of the control unit 50, the storage unit 60, or the like. The measurement unit 52 refers to this relationship, and thus the distance from the sensor head 30 to the target TA is measured on the basis of the measured waveform signal MS.

In this manner, the return light component RC included in the received light amount distribution signal shown in Fig. 2 which is a noise component for the measured waveform signal MS is removed by measuring the distance from the optical measurement device 100 to the target TA on the basis of the measured waveform signal MS. Therefore, it is possible to measure a distance by suppressing the influence of noise compared with a case where the distance from the optical measurement device 100 to the target TA is measured on the basis of the received light amount distribution signal of the reflected light which is reflected by the target TA.

The adjustment unit 53 is configured to adjust a sensitivity parameter with respect to the received light amount distribution signal of the reflected light of the target TA so that the measured waveform signal MS is acquired when a portion of the received light amount of the received light amount distribution signal of the reflected light which is reflected by the target TA is a predetermined value or higher.

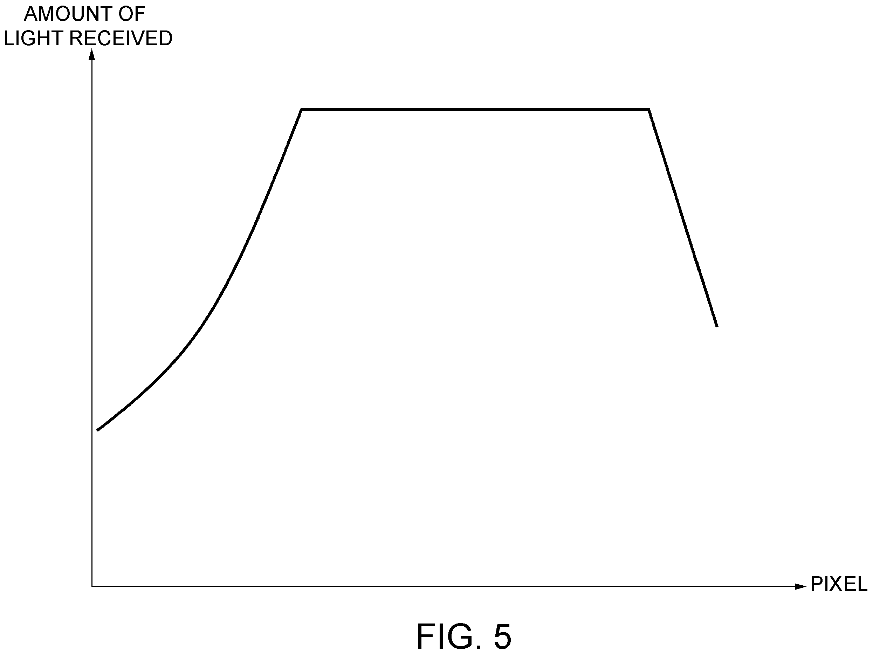

Here, another example of the received light amount distribution signal obtained by the light-receiving unit 40 will be described with reference to Fig. 5. The drawing is a waveform diagram illustrating another example of the received light amount distribution signal of the reflected light which is reflected by the target TA. In Fig. 5, the horizontal axis is a pixel (each light receiving element of the light receiving sensor 44), and the vertical axis is the amount of light received.

In the received light amount distribution signal of the reflected light of the target TA, a portion of the received light amount thereof may be a predetermined value or higher. As a result, as shown in Fig. 5, the received light amount distribution signal includes a portion where the received light amount remains at a predetermined value and does not exceed it. In this case, since the received light amount distribution signal shown in Fig. 5 does not include the signal light component SC like the received light amount distribution signal shown in Fig. 2, the acquisition unit 51 cannot acquire the measured waveform signal MS from the received light amount distribution signal shown in Fig. 5.

Consequently, in the received light amount distribution signal when the target TA is present, the adjustment unit 53 adjusts a sensitivity parameter with respect to the received light amount distribution signal of the reflected light of the target TA when a portion of the received light amount thereof is a predetermined value or higher as shown in Fig. 5. Here, it is possible to change the amount of light received in the received light amount distribution signal, for example, by adjusting a sensitivity parameter such as the amount of light projected. By the adjustment unit 53 adjusting the sensitivity parameter, the light-receiving unit 40 can obtain the received light amount distribution signal including the signal light component SC as shown in Fig. 2, and the measured waveform signal MS is acquired by the acquisition unit 51. Thus, the adjustment unit 53 adjusts a sensitivity parameter with respect to the received light amount distribution signal of the reflected light of the target TA so that the measured waveform signal MS is acquired when a portion of the received light amount of the received light amount distribution signal of the reflected light which is reflected by the target TA is a predetermined value or higher. Thereby, in the received light amount distribution signal of the reflected light of the target TA obtained after the sensitivity parameter is adjusted, it is possible to set the amount of light received to be less than a predetermined value, for example, to prevent the amount of light received from being saturated, and the received light amount distribution signal of the reflected light of the target TA after the sensitivity parameter is adjusted includes the signal light component SC shown in Fig. 2. Therefore, by adjusting the sensitivity parameter of the received light amount distribution signal of the reflected light which is reflected by the target TA, it is possible to acquire a measured waveform signal from the received light amount distribution signal of the reflected light of the target TA.

In the example shown in Fig. 5, in the received light amount distribution signal of the reflected light of the target TA, the predetermined value of the amount of light received is a value at which the amount of light received that can be received by the light-receiving unit 40 is saturated. Thereby, it is possible to prevent the amount of light received from being saturated in the received light amount distribution signal of the reflected light of the target TA obtained after the sensitivity parameter is adjusted.

In order to distinguish between the measured waveform signal MS acquired by the acquisition unit 51 and a signal caused by noise or the like, it is preferable that the adjustment unit 53 adjust a sensitivity parameter with respect to the received light amount distribution signal of the reflected light of the target TA so that the peak received light amount of the acquired measured waveform signal MS is set to be a predetermined value or higher. Thereby, for example, by setting a threshold less than a predetermined value with respect to the measured waveform signal MS, it is possible to exclude a signal caused by noise or the like that can be confused with the measured waveform signal MS.

The sensitivity parameter with respect to the received light amount distribution signal of the reflected light of the target TA includes at least one of the amount of light projected in the light source 10, the power of light projected in the light source 10, the exposure time of each of the light receiving elements in the light receiving sensor 44, and the gain of the amplifier circuit in the processing circuit 45. Thereby, it is possible to easily change the amount of light received in the received light amount distribution signal of the reflected light which is reflected by the target TA.

Hereinafter, the amount of light projected will be described as a sensitivity parameter of the received light amount distribution signal of the reflected light which is reflected by the target TA.

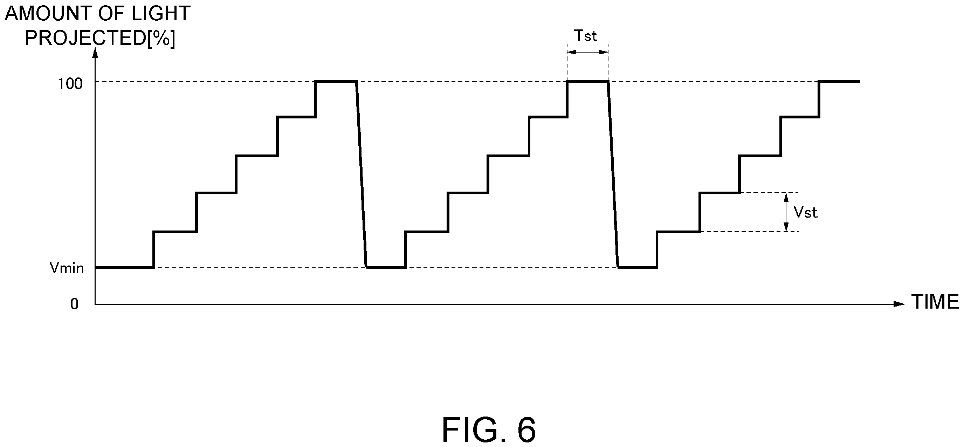

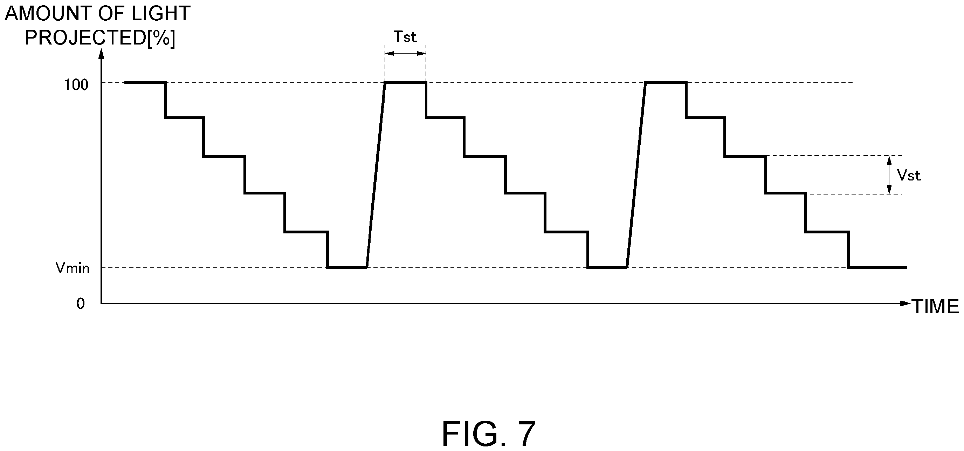

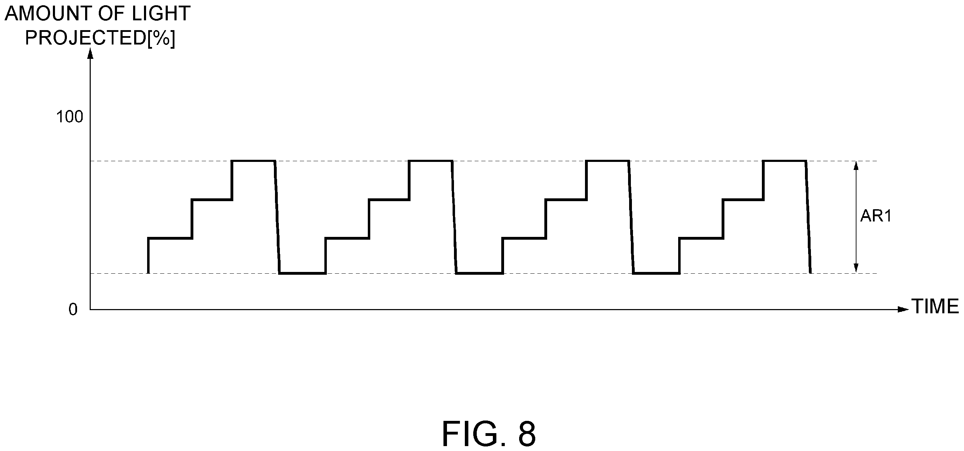

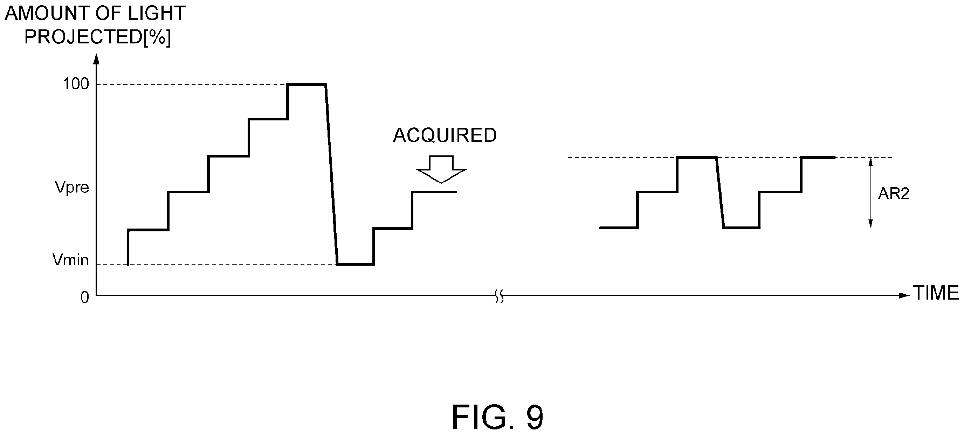

Here, the adjustment of a sensitivity parameter with respect to the received light amount distribution signal of the reflected light of the target TA which is performed by the adjustment unit 53 will be described with reference to Figs. 6 to 9. Fig. 6 is a signal diagram illustrating a first example in which the adjustment unit 53 shown in Fig. 1 adjusts the amount of light projected. Fig. 7 is a signal diagram illustrating a second example in which the adjustment unit 53 shown in Fig. 1 adjusts the amount of light projected. Fig. 8 is a signal diagram illustrating a third example in which the adjustment unit 53 shown in Fig. 1 adjusts the amount of light projected. Fig. 9 is a signal diagram illustrating a fourth example in which the adjustment unit 53 shown in Fig. 1 adjusts the amount of light projected. In Figs. 5 to 9, the horizontal axis is time, and the vertical axis is the amount of light projected [%].

### (First example)

The adjustment unit 53 gradually increases the amount of light projected until the measured waveform signal MS is acquired by the acquisition unit 51, for example, as shown in Fig. 6. A step width Vst of the amount of light projected is set to, for example, 10 [%], and a step width Tst of the light projection time of the amount of light projected is set to, for example, three times the measurement period (three periods). The values which are set to the step width Vst of the amount of light projected and the step width Tst of the light projection time are displayed on the display unit 70 to be described later, and may be able to be changed by the operation unit 80.

In a case where the measured waveform signal MS is not acquired even when the amount of light projected gradually increased reaches a predetermined value, or 100 [%] in the example shown in Fig. 6, the adjustment unit 53 lowers the amount of light projected to a lower limit Vmin. The lower limit Vmin of the amount of light projected is set to, for example, 10 [%]. Similarly to the step width Vst of the amount of light projected and the step width Tst of the light projection time, the value which is set to the lower limit Vmin of the amount of light projected is displayed on the display unit 70, and may be able to be changed by the operation unit 80.

After the amount of light projected is lowered to the lower limit Vmin, the adjustment unit 53 gradually increases the amount of light projected until the measured waveform signal MS is acquired by the acquisition unit 51 again.

### (Second example)

The adjustment unit 53 gradually lowers the amount of light projected until the measured waveform signal MS is acquired by the acquisition unit 51, for example, as shown in Fig. 7. The step width Vst of the amount of light projected is set to, for example, 10 [%], and the step width Tst of the light projection time of the amount of light projected is set to, for example, three times the measurement period (three periods). Similarly to the first example, the values which are set to the step width Vst of the amount of light projected and the step width Tst of light projection time are displayed on the display unit 70, and may be able to be changed by the operation unit 80.

In a case where the measured waveform signal MS is not acquired even when the amount of light projected gradually lowered reaches the lower limit Vmin which is set in advance, for example, 10 [%], the adjustment unit 53 increases the amount of light projected to a predetermined value, or 100 [%] in the example shown in Fig. 6. Similarly to the first example, the value which is set to the lower limit Vmin of the amount of light projected is displayed on the display unit 70, and may be able to be changed by the operation unit 80.

After the amount of light projected is increased to a predetermined value, the adjustment unit 53 gradually lowers the amount of light projected until the measured waveform signal MS is acquired by the acquisition unit 51 again.

### (Third example)

In a case where the reflectance of the target TA is known in advance, it is sufficient that the sensitivity parameter with respect to the received light amount distribution signal of the reflected light of the target TA is adjusted within a predetermined range. In this case, the adjustment unit 53 gradually increases the amount of light projected in an adjustment range AR1 until the measured waveform signal MS is acquired by the acquisition unit 51, for example, as shown in Fig. 8. The adjustment range AR1 is a range of the amount of light projected which is set on the basis of the reflectance of the target TA, and is, for example, a range in which the amount of light projected corresponding to the reflectance of the target TA is a median value. The adjustment range AR1 is displayed on the display unit 70, and is designated by the operation unit 80.

Similarly to the first example, the adjustment unit 53 gradually increases the amount of light projected by the step width Vst of the amount of light projected and the step width Tst of the light projection time, and in a case where the measured waveform signal MS is not acquired even when the amount of light projected reaches the upper limit of the adjustment range AR1, the adjustment unit 53 lowers the amount of light projected to the lower limit of the adjustment range AR1. Thereafter, the adjustment unit 53 gradually increases the amount of light projected in the adjustment range AR1 until the measured waveform signal MS is acquired by the acquisition unit 51 again.

The third example shows an example in which the adjustment unit 53 gradually increases the amount of light projected in the adjustment range AR1, but there is no limitation thereto. Similarly to the second example, the adjustment unit 53 may gradually lower the amount of light projected in the adjustment range AR1. In this case, in a case where the measured waveform signal MS is not acquired even when the amount of light projected reaches the lower limit of the adjustment range AR1, the adjustment unit 53 increases the amount of light projected to the upper limit of the adjustment range AR1.

In this manner, by setting the adjustment range AR1 of the sensitivity parameter on the basis of the reflectance of the target TA, it is possible to narrow (limit) the adjustment range of the sensitivity parameter, and to shorten a time taken to adjust the sensitivity parameter.

### (Fourth example)

In a case where the sensitivity parameter with respect to the received light amount distribution signal of the reflected light of the target TA is stored in the memory of the control unit 50, the storage unit 60, or the like when the measured waveform signal MS can be acquired by the acquisition unit 51, it is sufficient that the sensitivity parameter is adjusted within a predetermined range. In this case, the adjustment unit 53 gradually increases the amount of light projected in an adjustment range AR2 until the measured waveform signal MS is acquired by the acquisition unit 51, for example, as shown in Fig. 9. The adjustment range AR2 is a range of the amount of light projected which is set on the basis of the amount of light projected Vpre when the previous measured waveform signal MS is acquired, and is, for example, a range in which the amount of light projected when the previous measured waveform signal MS is acquired is a median value.

Similarly to the first example, the adjustment unit 53 gradually increases the amount of light projected by the step width Vst of the amount of light projected and the step width Tst of the light projection time, and in a case where the measured waveform signal MS is not acquired even when the amount of light projected reaches the upper limit of the adjustment range AR2, the adjustment unit 53 lowers the amount of light projected to the lower limit of the adjustment range AR2. Thereafter, the adjustment unit 53 gradually increases the amount of light projected in the adjustment range AR2 until the measured waveform signal MS is acquired by the acquisition unit 51 again.

The fourth example shows an example in which the adjustment unit 53 gradually increases the amount of light projected in the adjustment range AR2, but there is no limitation thereto. Similarly to the second example, the adjustment unit 53 may gradually lower the amount of light projected in the adjustment range AR2. In this case, in a case where the measured waveform signal MS is not acquired even when the amount of light projected reaches the lower limit of the adjustment range AR2, the adjustment unit 53 increases the amount of light projected to the upper limit of the adjustment range AR2.

In this manner, by setting the adjustment range AR2 of the sensitivity parameter on the basis of the sensitivity parameter when the previous measured waveform signal MS is acquired, it is possible to narrow (limit) the adjustment range of the sensitivity parameter, and to shorten a time taken to adjust the sensitivity parameter.

Returning to the description of Fig. 1, the display unit 70 is intended to output information. Specifically, the display unit 70 is configured to display, for example, setting content, an operation state, a communication state, and the like. The display unit 70 is configured to include, for example, a multi-digit 7- or 11-segment display and a display lamp that emits light in a plurality of colors.

The operation unit 80 is intended to input information through a user's operation. The operation unit 80 is configured to include, for example, a button, a switch, or the like. In this case, when a user operates a button, a switch, or the like, a signal according to the operation is input to the control unit 50. The control unit 50 generates data corresponding to the signal, thereby allowing information to be input to the optical measurement device 100.

The present embodiment shows an example in which the optical measurement device 100 is a white light confocal system, but there is no limitation thereto. The optical measurement device of the present invention may be, for example, a triangulation system. In this case, the optical measurement device is only required to include a light projection unit that emits light toward a target, a light-receiving unit that obtains a received light amount distribution signal for each pixel, an acquisition unit that acquires a measured waveform signal from the received light amount distribution signal of reflected light which is reflected by a target TA on the basis of the received light amount distribution signal when the target TA is not present, and the adjustment unit 53 that adjusts a sensitivity parameter with respect to the received light amount distribution signal of the reflected light of the target TA so that the measured waveform signal MS is acquired when a portion of the received light amount of the received light amount distribution signal of the reflected light which is reflected by the target TA is a predetermined value or higher.

In this manner, according to the optical measurement device 100 and an optical measurement method of the present embodiment, the sensitivity parameter with respect to the received light amount distribution signal of the reflected light of the target TA is adjusted so that the measured waveform signal MS is acquired when a portion of the received light amount of the received light amount distribution signal of the reflected light which is reflected by the target TA is a predetermined value or higher. Thereby, in the received light amount distribution signal of the reflected light of the target TA obtained after the sensitivity parameter is adjusted, it is possible to set the amount of light received to be less than a predetermined value, for example, to prevent the amount of light received from being saturated, and the received light amount distribution signal of the reflected light of the target TA after the sensitivity parameter is adjusted includes the signal light component SC shown in Fig. 2. Therefore, by adjusting the sensitivity parameter of the received light amount distribution signal of the reflected light which is reflected by the target TA, it is possible to acquire a measured waveform signal from the received light amount distribution signal of the reflected light of the target TA.

The embodiment described above is intended to facilitate understanding of the present invention, and is not to be interpreted as limiting the present invention. Elements and their arrangements, materials, conditions, shapes, sizes, and the like included in the embodiment are not limited to those exemplified and can be modified appropriately. In addition, components shown in different embodiments can be partially replaced or combined.

### (Addition)

1. An optical measurement device (100) including:
a light source (10) that emits light toward a target (TA);
a light-receiving unit (40) configured so that each of a plurality of pixels is able to detect an amount of light received, the light-receiving unit (40) obtaining a received light amount distribution signal for each pixel;
an acquisition unit (51) that acquires a measured waveform signal MS from the received light amount distribution signal of reflected light which is reflected by the target (TA) on the basis of the received light amount distribution signal when the target (TA) is not present; and
an adjustment unit (53) that adjusts a sensitivity parameter with respect to the received light amount distribution signal of the reflected light so that the measured waveform signal (MS) is acquired when a portion of the received light amount of the received light amount distribution signal of the reflected light is a predetermined value or higher.

9. An optical measurement method including:
a light projection step of emitting light toward a target (TA);
a light-receiving step of obtaining a received light amount distribution signal for each pixel;
an acquisition step of acquiring a measured waveform signal (MS) from the received light amount distribution signal of reflected light which is reflected by the target (TA) on the basis of the received light amount distribution signal when the target (TA) is not present; and
an adjustment step of adjusting a sensitivity parameter with respect to the received light amount distribution signal of the reflected light so that measured waveform signal (MS) is acquired when a portion of the received light amount of the received light amount distribution signal of the reflected light is a predetermined value or higher.

### [Reference Signs List]

10 Light source
20 Light guide unit
21 First cable
22 Second cable
23 Third cable
24 Optical coupler
30 Sensor head
31 Collimator lens
32 Diffraction lens
33 Objective lens
40 Light-receiving unit
41 Collimator lens
42 Diffraction grating
43 Adjustment lens
44 Light receiving sensor
45 Processing circuit
50 Control unit
51 Acquisition unit
52 Measurement unit
53 Adjustment unit
60 Storage unit
70 Display unit
80 Operation unit
100 Optical measurement device
AR1, AR2 Adjustment range
L1, L2 Light
MS Measured waveform signal
RC Return light component
SC Signal light component
TA Target
Tst Step width
Vmin Lower limit
Vpre Amount of light projected
Vst Step width
λ Wavelength

## Claims

1. An optical measurement device comprising:
a light projection unit that emits light toward a target;
a light-receiving unit configured so that each of a plurality of pixels is able to detect an amount of light received, the light-receiving unit obtaining a received light amount distribution signal for each of the pixels;
an acquisition unit that acquires a measured waveform signal from the received light amount distribution signal of reflected light which is reflected by the target on the basis of the received light amount distribution signal when the target is not present; and
an adjustment unit that adjusts a sensitivity parameter with respect to the received light amount distribution signal of the reflected light so that the measured waveform signal is acquired when a portion of the received light amount of the received light amount distribution signal of the reflected light is a predetermined value or higher.

2. The optical measurement device according to claim 1, wherein the adjustment unit adjusts the sensitivity parameter with respect to the received light amount distribution signal of the reflected light so that a peak received light amount of the acquired measured waveform signal is set to a predetermined value or higher.

3. The optical measurement device according to claim 1 or 2, wherein the adjustment unit sets a range for adjusting the sensitivity parameter on the basis of a reflectance of the target.

4. The optical measurement device according to claim 1 or 2, wherein the adjustment unit sets a range for adjusting the sensitivity parameter on the basis of the sensitivity parameter when the previous measured waveform signal is acquired.

5. The optical measurement device according to any one of claims 1 to 4,
wherein the sensitivity parameter includes at least one of an amount of the light projected, power of the light projected, an exposure time of the light-receiving unit, and a gain of the light-receiving unit.

6. The optical measurement device according to any one of claims 1 to 5,
wherein the predetermined value of the amount of light received is a value at which the amount of light received is saturated.

7. The optical measurement device according to any one of claims 1 to 6, further comprising a measurement unit that measures a distance from the optical measurement device to the target on the basis of the measured waveform signal.

8. The optical measurement device according to any one of claims 1 to 7, further comprising an optical system that causes chromatic aberration in an optical axis direction with respect to the light and irradiates the target with the light that causes chromatic aberration,
wherein the light includes a plurality of wavelength components,
the optical system condenses the reflected light, and
the light-receiving unit is configured to be able to detect an amount of light received for each of the wavelength components.

9. An optical measurement method comprising:
a light projection step of emitting light toward a target;
a light-receiving step of obtaining a received light amount distribution signal for each pixel;
an acquisition step of acquiring a measured waveform signal from the received light amount distribution signal of reflected light which is reflected by the target on the basis of the received light amount distribution signal when the target is not present; and
an adjustment step of adjusting a sensitivity parameter with respect to the received light amount distribution signal of the reflected light so that the measured waveform signal is acquired when a portion of the received light amount of the received light amount distribution signal of the reflected light is a predetermined value or higher.

10. The optical measurement method according to claim 9, wherein the adjustment step includes adjusting the sensitivity parameter with respect to the received light amount distribution signal of the reflected light so that a peak received light amount of the acquired measured waveform signal is set to a predetermined value or higher.

11. The optical measurement method according to claim 9 or 10, wherein the adjustment step includes setting a range for adjusting the sensitivity parameter on the basis of a reflectance of the target.

12. The optical measurement method according to claim 9 or 10, wherein the adjustment step includes setting a range for adjusting the sensitivity parameter on the basis of the sensitivity parameter when the previous measured waveform signal is acquired.

13. The optical measurement method according to according to any one of claims 9 to 12, wherein the sensitivity parameter includes at least one of an amount of the light projected, power of the light projected, an exposure time of a light-receiving unit, and a gain of the light-receiving unit.

14. The optical measurement method according to any one of claims 9 to 13, wherein the predetermined value of the amount of light received is a value at which the amount of light received is saturated.

15. The optical measurement method according to any one of claims 9 to 14, further comprising a measurement step of measuring a distance from an optical measurement device to the target on the basis of the measured waveform signal.
